# EUROPEAN PATENT APPLICATION

(11) **EP 4 815 520 A1**
(43) Date of publication of application: **30.09.2026**
(21) Application number: 25166515.4
(22) Date of filing: 27.03.2025
(51) Int. Cl.: H04W 4/50, H04W 12/04, H04W 12/30

(54) **CONFIGURATION OF A SECURE ELEMENT**

(71) Applicant: Giesecke+Devrient Mobile Security Germany GmbH, 81677 München (DE)
(72) Inventor: Perarnau, Xavier, 81677 München (DE); Garcias, Albert, 81677 München (DE)
(74) Representative: Giesecke+Devrient IP

(57) **Abstract**

Proposed is a method of configuring a secure element (10) with an operational profile (B) using a provisioning unit (22). The provisioning unit (22) is provided with profile data (D) of an operational profile (B). I a memory (16) of the secure element (10) a generic installation key (I), a temporal network contact credentials (T) and a unique identifier of the secure element (E) re installed. A base profile is installed (A) in the secure element (10) using the generic installation key (I). A confirmation information (T) confirming installation of the base profile (A) including the unique identifier (E) is received. A temporal connection between secure element (10) and profile provisioning unit (22) using the temporal contact credentials (T) is established. Profile data (D) corresponding to the unique identifier (E) are provided to the secure element using (10) the temporal connection. The profile data (D) are integrated into the base profile (A) to create an operational profile (B).

## Description

The invention relates to the configuration of a secure element with an operational profile.

EP 4124980 A1 discloses a method for personalizing an operating system in a secure element by loading a software image into the memory of the secure element in a first stage, loading a soft-ware personalization record into the memory of the secure element in a second stage and personalizing the loaded software image using the software personalization record in a third stage, where the personalization of the software image is initiated by an internal agent of the secure element. The solution enables personalizing a software image outside of a certified environment of a manufacturing site. The personalization must, however, be prepared at an early stage.

EP 2533485 B1 discloses a method for providing subscription data of a profile from a data providing unit to a subscriber identity module (SIM) hosted in a mobile device, wherein the subscriber data are sent to the SIM in a challenge message of a challenge-response procedure. The provisioning of profile data or other data from a server to an eUICC (Embedded Universal Integrated Circuit Card) in messages of a challenge-response procedure is also referred to as Ultra-Light-Bootstrap (ULB) provisioning procedure.

GSMA SGP.22 RSP Technical Specification Version 3.0, 19th October 2022, describes architectures and procedures for provisioning a profile on an eUICC. The download basically is initialized by an eUICC. An operational profile is provided by a server referred to as SM-DP+ (Sub-scription Manager Data Preparation enhanced) based on information provided by the eUICC wherein an operational profile is defined as a combination of operator data and applications to be provisioned on an eUICC for the purposes of providing services by the network operator. The profile is downloaded to the eUICC and installed in the eUICC thereby personalizing the eUICC.

It is an object of the invention to increase flexibility and efficiency of the personalization of a secure element.

This task is solved by a method and a system according to the independent claims. Preferred embodiments of the solutions are defined by the dependent claims.

The method according to the invention has the advantage that the final personalization of a secure element can take place at a late stage in the manufacturing process. The final personalization can take place during the first commissioning of a receiving device accommodating a secure element.

The advantage of late personalization is achieved by combining the use of a base profile to do the major part of a personalization with temporal network contact credentials to complete a personalization by installing individual profile data.

A particular advantage of the method is that very little data needs to be exchanged between a secure element and a provisioning unit. Accordingly, the costs for using a telecommunications network can be kept low. Furthermore, the energy required to use the telecommunications network is also low, which is particularly advantageous if a secure element is located in a battery operated device.

In an advantageous manner, a key pair consisting of a base key and a counterkey is calculated in a first phase of a personalization process, whereby the base key is stored in the secure element and the counterkey is transmitted to the provisioning unit.

Since only the secure element that has the base key can decrypt profile data received from the provisioning unit, it is ensured that two secure elements cannot have the same operational profiles.

Another advantage is that no sensitive network operator (MNO) data needs to be stored in the device binding box. In particular, no network operator code (OP), no derived operator code (OPc) and no network operator-specific code (MNO unique info) need to be provided.

An advantage of the method according to the invention compared to conventional personalization is the reduced data exchange between the instances involved.

By initially personalizing a secure element with a basic profile, the necessary data exchange between a device binding box and a profile provisioning unit is low. The costs for using a telecommunications network can therefore be kept low.

One advantage of using base profiles is that no assignment directories need to be kept and searched. A secure element can be equipped with a base profile without further coordination with another instance.

A further advantage of the method according to the invention is that the personalization of a secure element can take place without the need for a telecommunications connection to a provisioning unit.

A further advantage of the method according to the invention is that the individual personalization data can be requested and transmitted in different ways. Among other things, this can be done using SMS messages.

Personalization here refers to the configuration of a secure element with individual data, which can then be used to uniquely identify the secure element.

The preferred embodiments presented with reference to the method according to the invention and their advantages apply accordingly to the security element according to the invention. The components of the security element according to the invention are each designed to carry out the respective steps of the method.

Further features of the invention are shown in the claims, the figures and the description of the figures.

Examples of embodiments of the invention are explained in more detail below with reference to a schematic drawing.

Brief description of the drawings
Fig. 1 shows a secure element in a receiving device;
Fig. 2 shows a system for configuring a secure element and the interaction of its components; and
Fig. 3 shows a schematic representation of the steps of a procedure for configuring a secure element with a profile.

Identical or functionally identical elements are marked with the same reference symbols in the figures.

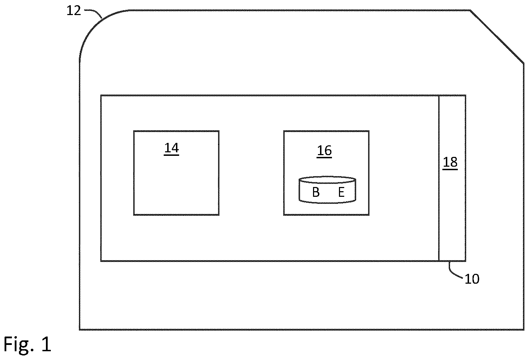

Fig. 1 shows a secure element 10 in a receiving device 12. The secure element 12 is an electronic component which is specially protected against manipulation by hardware and software. The secure element 12 acts as an identification module enabling a receiving device 12 to identify itself as a subscriber to an operator of a data communication network. The secure element 10 is located in a receiving device 12 that uses services provided via the data communication network or makes them available for use by others.

The receiving device 12 can be a cell phone or a device for using Internet of Things (IoT) technologies, such as a smart meter for recording a consumption variable such as electricity or water. The data communication network can be a telecommunications network provided by a mobile network operator (MNO). In the following, it is assumed that the secure element 12 is a subscriber identification module for logging into a telecommunications network provided by a mobile network operator (MNO).

The identification of a receiving device 12 as a subscriber in a telecommunications network 30 is carried out using an operational profile B stored in the secure element 10. The operational profile B contains data that uniquely and verifiably identify a subscriber and an authorization to use services of a particular network operator. The data contained in a profile B include an IMSI (International Mobile Subscriber Identity), authentication keys and a certificate. The data may also contain a transport identifier, typically in the form of an ICCID.

In order to assign a secure element 10 to a telecommunications network 30, an operational profile B is created by the respective network operator. It is downloaded to the secure element 10, installed and activated. The secure element 10 can then log into the telecommunications network 30, hereinafter also simply referred to as network, so that the receiving device 12 can send and receive data via the network 30.

The secure element 10 can be an eUICC or an iUICC. The eUICC or iUICC consists of an integrated circuit specially protected against attacks and being equipped with software. Integrated circuit an software together form the eUICC or the iUICC. For the following description, it is assumed that the secure element 10 is embodied as an eUICC.

The secure element 10 includes a processor 14 and a memory 16. The memory 16 typically is a non-volatile memory. The processor 14 is designed to execute instructions, in particular instructions that are stored in the memory 16. Furthermore, the secure element 10 has a communication interface 18. Through the communication interface 18, data can be written to or read from the memory 16.

In the memory 16, an operational profile B is stored. The operational profile B is used by the secure element 10 to log into a telecommunications network 30. The profile B is installed in the memory 16 as part of a configuration of the secure element 10.

The memory 16 can also store a unique identifier E of the secure element 10 and a signing key G. The unique identifier E may be an eID (eUICC identifier) according to SGP.22. The signing key G can be a GSMA key.

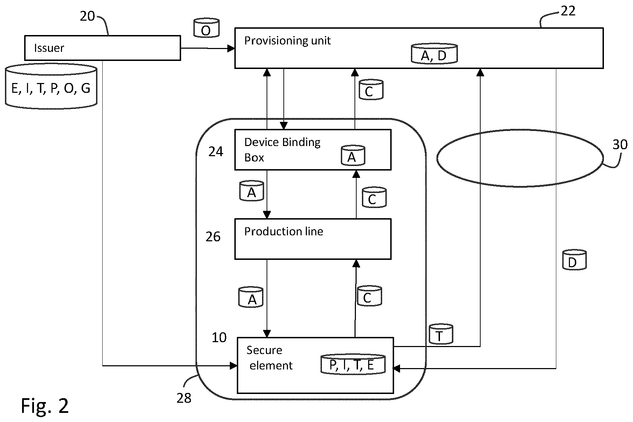

Fig. 2 schematically shows a system for configuring a secure element 10 with a profile and the interaction of its components.

The system comprises a secure elements issuer 20 and a provisioning unit 22 connected thereto. It further comprises a device binding box 24 connected to the provisioning unit 22 and a production line 26 connected to the device binding box 24. The system further comprises a telecommunications network 30. Further, a secure element 10 processed in the system is a temporary part of the system.

The secure element 10 is provided by an issuer 20. The issuer 20 may, for example, be a provider of identification elements and services that enable secure digital transactions. The secure element 10 is provided with a unique identifier E. The unique identifier E may be an eID (eUICC identifier) according to SGP.22. If the secure element 10 is not yet provided with a unique identifier E by its manufacturer, the issuer 20 assigns a unique identifier E to the secure element 10.

The issuer 20 is configured to calculate a base key P and a corresponding counterkey O for a secure element 10. Further, the issuer 20 provides a generic installation key I and temporal network contact credentials T, which allow the establishment of a connection to a telecommunications network 30 meeting minimum requirements.

The generic profile installation key I enables a base profile A to be inserted into the secure element 10 at a later time. The base profile A corresponds to an operational profile B, but does not contain any individualizing data.. In particular, the basic profile A does not contain an IMSI or any authentication keys, identification secrets (PIN) or certificates. A secure element 10 provided with a base profile A is not personalized

The temporal network contact credentials T can take the form of a profile, reduced to essential data, for a predetermined telecommunications network 30. In another embodiment, the provisional contact data T include a provisional IMSI. In a further embodiment, the provisional contact data T include the establishment of an SMS connection.

The base key P and the corresponding counterkey O can have the form of a secret key and a public key of a PKI key pair. They can also be in the form of symmetric keys. Conveniently, base key P and counterkey O can be designed as one-time keys that can be used exactly once and cannot be reused.

The unique identifier E is used to identify a specific IC used in an eUICC or iUICC. It can be introduced by the issuer 20 of the secure element 10. Typically, it is assigned to the IC by the manufacturer of the IC. The unique identifier E can be an eID as defined in SGP.22.

The issuer 20 installs the base key P, the generic profile installation key I, the temporal network contact credentials T and, if applicable, the unique identifier E in the memory 16 of the secure element 10.

The counterkey O corresponding to the base key P and an information on the number and type of issued secure elements 10 is transmitted by the issuer 20 to the provisioning unit 22.

The provisioning unit 22 can be operated by the issuer 20. It can also take the form of an independently operated instance. Basic profiles A are stored in the provisioning unit 22.

Further, sets of profile data D are stored in the provisioning unit 22. Profile data D is data that transform basic profiles A into operational profiles D after integration. The profile data D comprise at least an IMSI, an authentication key, a network operator code OP and certificates. Furthermore, the profile data D generally include identification secrets PIN. The profile data D may also include applications.

The provisioning unit 22 is configured to provide authorized secure elements 10 and authorized other components with profiles A and profile data D. It is configured to transmit profile data D to secure elements 10 via a telecommunications network 30.

The provisioning unit 22 is connected to a device binding box 24. The device binding box 24 is typically located at a the site of a manufacturer 28 of devices 12 into which secure elements 10 are inserted. Devices 12 of this type can be, for example, mobile telephones or intelligent measuring devices that for example enable the recording of electricity or water consumption values.

The device binding box 24 is connected to a production line 26 also is located at the manufacturer 28. In the production line 26 secure elements 10 are processed and prepared for use in a respective receiving device 12. During such processing, the security elements 10 likewise are in the environment of the manufacturer 28.

The device binding box 24 contains base profiles A. The base profiles A can be installed into secure elements 10 independently of the provisioning unit 22. A base profile A is structurally adapted to a specific network 30. It can contain general network-specific data which are identical for secure elements 10 assigned to this network 30. A base profile A does not contain any individualization data for a secure element 10. A base profile A in particular does not contain authentication keys, certificates and personalization data.

In a preparatory step, the device binding box 24 is set up to request one or more base profiles A from the provisioning unit 22 in accordance with the specifications of the production unit 26. The provisioning unit 22 is set up to supply corresponding base profiles A to the device binding box 24 in response to a request.

Conveniently, base profiles A are provided together with the preparation of sets of operational profiles B. The device binding box 24 requests series of operational profiles B for one or more networks 30 from the provisioning unit 22 according to specifications of the manufacturer 28 or the production line 26. The provisioning unit 22 provides corresponding base profiles A for the respective networks 30 to the device binding box 24. The provisioning unit 22 further provides profile data D for the requested operational profiles B in blocks.

The provisioning unit 22 is configured to send information about provided profile data D to the device binding box 24. The information may include an indication of the number of sets of profile data 53 matching a particular base profile A. In another embodiment, it may be provided that the provisioning unit 22 provides ICCIDs of the provided profile data D to the device binding box 24.

The production line 26 is designed to communicate with supplied secure elements 10 and has a corresponding interface. Secure elements 10 which have been equipped with a generic profile installation key I, temporal network contact credentials T, a base key P and a unique identifier E for the secure element 10 by the issuer 20, are supplied to the production line 26.

The production line 26 is configured to insert base profiles A into the memory 16 of supplied secure elements 10. For this the production line 26 is equipped with installation keys enabling installation of base profiles A in secure elements 10.

To prepare installation of a base profile A for example, the manufacturer 28 of the devices 12 selects a desired base profile A from the base profiles A stored in the device binding box 24. The selected base profile B is then transmitted by the device binding box 24 to the production line 26.

In the production line 26, the base profile A is installed in the secure element 10. The installation takes place in a dialog between the production line 26 and the secure element 10 via its interface 18. The secure element 10 installs the base profile A in its memory 16. As part of the installation, the secure element 10 determines the unique identifier E stored in its memory 16.

If the installation is successful, the secure element 10 generates confirmation information. The confirmation information C contains the unique identifier E read out, the type designation of the installed base profile A and an installation result.

The secure element 10 is configured to send the confirmation information C back to the production line 26 in a corresponding data exchange as part of the installation process. For the return, the secure element 10 signs at least the unique identifier E and the name of the installed base profile A with the GSMA key stored on the secure element.

The production line 26 is set up to forward the received confirmation information C to the device binding box 24.

Conveniently, the confirmation information C of a plurality of secure elements 10 is collected in the device binding box 24 until, for example, all secure elements of a production batch are provided with a base profile A.

Upon a triggering event, such as the application of a base profile A to the last secure element 10 of a production batch, the device binding box 24 sends the signed confirmation information, if any, collected to the provisioning unit 22.

The secure element 10 is set up to use the temporal network contact credentials T stored in its memory 16 to establish a connection to the provisioning unit 22 at a fixed or selectable time after a secure element 10 has been provided with a base profile A. The secure element 10 identifies itself using the unique identifier E. In a variant, the identification can be carried out by using the base key P.

Conveniently, the connection is established via the receiving device 12 after the secure element 10 has been inserted into or connected to the receiving device 12. The connection is conveniently established when the device 12 provided with the secure element 10 is first put into operation.

The profile provisioning unit 22 determines the unique identifier E transmitted by the secure element 10. If the profile provisioning unit 22 identifies a secure element 10, it checks whether confirmation information is available for the identified secure element 10. If this is the case, the profile provisioning unit 22 prepares the personalization of the identified secure element 10.

The provisioning unit 22 uses the profile type information to determine the type of operational profile B to be set up and the counterkey O. It selects a set from the profile data D provided for the profile type determined.

The provisioning unit 22 encrypts the profile data D with the counterkey O associated with the secure element 10. The provisioning unit 22 transmits the encrypted profile data D to the secure element 10.

The secure element 10 decrypts the encrypted profile data D and installs it in the base profile A present in its memory 16. By inserting the profile data D, an operational profile B is created from the base profile A. After successful installation, the secure element 10 activates the complete operational profile B.

In a variant of the embodiment described above, the issuer 20 includes a generic profile installation key and temporal network contact credentials T in the secure element 10 when providing the secure element 10, but no base key P. Furthermore, the issuer 20 transmits the generic profile installation key and the unique identifier E to the profile provisioning unit 22, but not a counterkey O corresponding to the base key P.

Instead, a base key P and a corresponding counter-key O are calculated in the secure element 10 as part of the installation of the base profile A in the production line 26. The secure element 10 is designed to transmit the counter-key O in the confirmation information to the production line 26, from where it is further transmitted together with the unique identifier E to the provisioning unit 22.

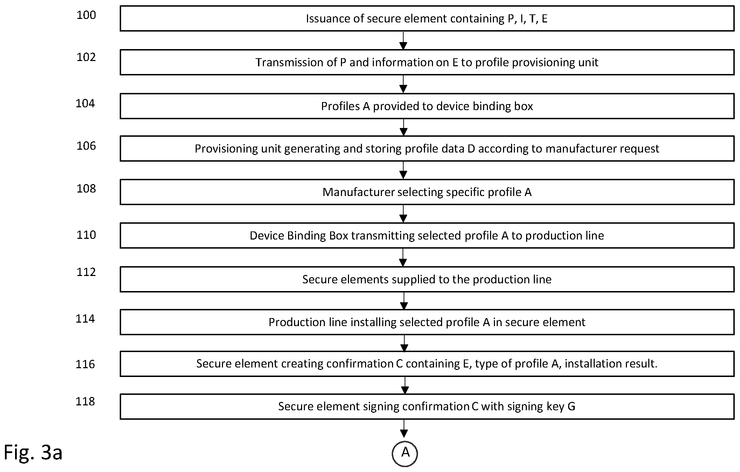

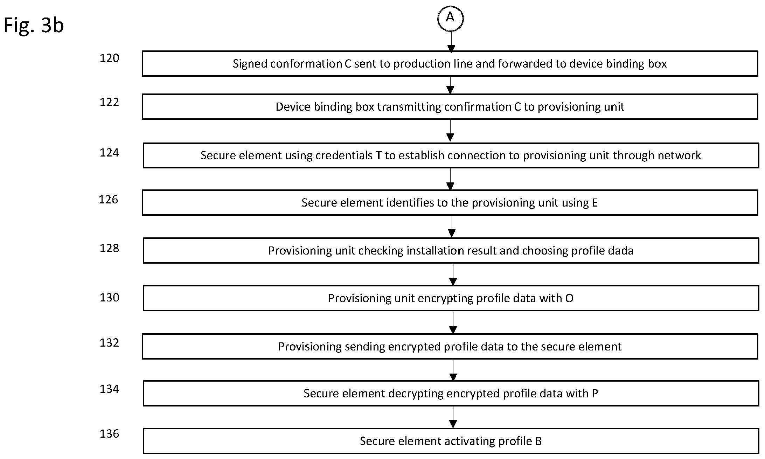

Fig. 3 shows a schematic representation of the sequence of steps carried out in a method for configuring a secure element 10 with an operational profile B.

In a first step 100, a secure element 10 is issued by the issuer 20 containing a base key P, a generic installation key I, temporal network contact credentials T and a unique identifier E. Typically, the unique identifier E is pre-installed by the IC the manufacturer.

In a following step 102, a counterkey O corresponding to the base key P and information on the unique identifier E are transmitted to the profile provisioning unit 22.

In a next step 104, one or more basic profiles A corresponding to one or more networks 30 are provided in the device binding box 24. The basic profiles A may be received from the provisioning unit 22.

In a next step 106, the manufacturer 28 requests from the provisioning unit 22 a desired number of profile data D corresponding to networks 30 the manufacturer 28 intends to use. The provisioning unit 22 generates the profile data D and stores them. As a result for each network 30 requested, the provisioning unit 22 keeps pools with sets of available profile data D that can be used to be installed on secure elements 10.

In a next step 108, the device manufacturer 28 selects a specific basic profile A from the available basic profiles.

In a next step 110, the device binding box 24 transmits a selected base profile A to the production line 26 connected to the device binding box 24.

In a next step 112, secure elements 10 are supplied to the production line 26. The secure elements 10 have been equipped with a generic installation key I, temporal network contact credentials T, a basic key P and a unique identifier E.

In a next step 114, the production line 26 installs in a dialog between the production line 26 and the secure element 10, the transmitted base profile A in a supplied secure element 10.

In a next step 116, the secure element 10 creates a confirmation information C containing the unique identifier E, the type of the installed base profile A and an installation result.

In a next step 118, the secure element signs, in the confirmation information C,at least the unique identifier E and the type of the installed base profile A with a signing key G stored in the secure element 10.

In a next step 120, the secure element 10 transmits the signed confirmation information back to the production line 26. The production line 26 forwards the received confirmation information C to the device binding box 24.

In a next step 122, which may be performed at a predetermined time, the device binding box 24 transmits the confirmation information C to the profile providing unit 22.

In a next step 124, which may be performed at a predetermined or a selected time after a secure element 10 has been provided with a base profile A, the secure element 10 uses the temporal network credentials T stored in its memory 16 to establish a connection to the provisioning unit 22. The connection may be established through a temporary network 30. The connection may be established using a ULB process.

In a next step 126, the secure element 10 identifies itself to the profile provisioning unit 22 and requests for a final personalization. The identification may be done based on the unique identifier E which is sent from the secure element 10. The identification may also be done using an ICCID (Integrated Circuit Card ID).

In a next step 128, the provisioning unit 22 checks whether the confirmation information received C indicates a successful installation of the base profile A. If this is true, the provisioning unit 22 chooses a set of available profile data D from the pool and assigns them to the identified secure element 10. Using the individual data contained in the profile data D i.e., in particular an IMSI, an operator code (OP), a derived operator code (OPc), a subscriber authentication code (Ki) and a certificate, the provisioning unit 22 prepares the dynamic personalization of a base profile A.

In a next step 130, the provisioning unit 22 encrypts the profile data D with the counterkey O associated with the secure element 10.

In a next step 132, the provisioning unit 22 transmits the encrypted profile data D to the secure element 10.

In a next step 134, the secure element 10 decrypts the encrypted profile data D and installs it into the base profile A present in its memory 16. The base profile thereby is converted to an operational profile B.

In a next step 136, after successful installation, the secure element 10 activates the subsequent operational profile B.

In a variant of the embodiment described above, the issuer 20 introduces a generic installation key I and temporal network credentials T into the secure element 10 when it is provided, but no base key P. Also, in step 102, the issuer 20 transmits to the provisioning unit 22 the generic installation key and the unique identifier, but not a counterkey O corresponding to the base key P.

The calculation of a base key P and a corresponding counterkey O takes place instead in the secure element 10 as part of the installation of the base profile A in step 114. The calculated counter-key O is transmitted by the secure element 10 in the confirmation information C to the production line, from where it is transferred to the profile provisioning 22 unit together with the unique identifier E.

All embodiments described and those shown in the figures can, of course, be combined with each other in any way, insofar as this is technically possible. The invention is therefore not limited to the embodiments shown but includes any combination of embodiments covered by the claims.

While remaining within the basic idea. i.e., of personalizing a secure element by bringing base profiles to the secure element via a user connection device binding box and subsequently adding via a profile provisioning unit profile data to the base profile through a network connection established based on temporal network contact credentials, the invention described allows further useful embodiments which are not described in detail for reasons of clarity. For example, the components involved can have a substructure or themselves consist of several components. The system can include further components that, for example, carry out supporting steps. It is also possible to carry out individual process steps in a different sequence. It is also possible to carry out additional process steps or to subdivide individual process steps into several sub-steps.

### List of reference signs

- 10: secure element
- 12: device
- 14: processor
- 16: memory
- 18: interface
- 20: issuer
- 22: provisioning unit
- 24: device binding box
- 26: production line
- 28: manufacturer
- 30: data communication (telecommunication) network
- E: unique identifier
- P: base key
- O: counterkey
- I: generic installation key
- T: temporal network contact credentials
- A: base profile
- D: profile data
- B: operational profile
- C: confirmation information
- G: signing key
- 100 - 136: process steps

## Claims

1. A method of configuring a secure element (10) with an operational profile (B) using a provisioning unit (22), comprising the steps of:
Providing, in the provisioning unit (22), profile data (D) of an operational profile (B);
installing in a memory (16) of the secure element (10)
a generic installation key (I),
temporal network contact credentials (T) to a data communication network (30)
a unique identifier of the secure element (E);
installing, in the secure element (10), using the generic installation key (I), a base profile (A);
receiving, in the provisioning unit (22), a confirmation information (C) confirming installation of the base profile (A) including the unique identifier (E);
establishing, through a data communication network (30), using the temporal network contact credentials (T), a temporal connection between the secure element (10) and the provisioning unit (22);
identifying the secure element (10) that established the temporal connection, providing profile data (D) corresponding to the confirmation information (T) to the secure element using (10) the temporal connection;
integrating the profile data (D) into the base profile (A) to create an operational profile (B).

2. A method according to claim 1, **characterized in that** the confirmation information (C) is created in the secure element (10) after successful installation of the base profile (A)

3. A method according to claim 1, **characterized in that** after identification of a secure element (10), the provisioning unit (22) checks for the identified secure element (10), if the provisioning unit (22) has received a confirmation information (C).

4. A method according to claim 1 or 2, **characterized in that** in the step of providing profile data (D) in the provisioning unit (22), a series of profile data (D) corresponding to a network (30) is provided and the provisioning unit (22) selects a set of profile data (D) from the series of profile data (D) after identification of a secure element (10).

5. A method according to any of the previous claims, **characterized in that** it the secure element (10) that established the temporal connection is identified using the unique identifier (E).

6. A method according to any of the previous claims **characterized in that** it further comprises steps of:
installing, in the memory of the secure element (10), a base key (P) corresponding to a counter key (O), and
providing the counter key (O) to the provisioning unit (22).

7. A method according to any of the previous claims, **characterized in that** it further comprises the steps of
encrypting, in the provisioning unit (22), the profile data (D) with the counter key (O).

8. A method according any of the previous claims, **characterized in that** it further comprises the step of decrypting, in the secure element (10), the encrypted profile data (D) with the base key (P).

9. A system for configuring a secure element (10) with an operational profile (B) comprising:
a provisioning unit (22) configured to provide profile data (D) of an operational profile (B),
an issuer (20) configured to install in a memory (16) of the secure element (10), a generic installation key (I), temporal network contact credentials (T) and a unique identifier (E);
a production line (26) configured to install in the secure element (10), a base profile (A) using the generic installation key (I);
wherein the provisioning unit (22) is further configured to receive a confirmation information (C) confirming installation of the base profile (A) including the unique identifier (E);
wherein the secure element (10) is further configured to establish a temporal connection between the secure element (10) and the provisioning unit (22) using the temporal contact credentials (T);
wherein the provisioning unit (22) is further configured to identify a secure element (10) using the unique identifier (E), and to provide profile data (D) corresponding to the confirmation information (T) to the secure element using (10) the temporal connection; and
wherein the secure element (10) is further configured to integrate the profile data (D) into the base profile (A) to create an operational profile (B).

10. A system according to claim 9, **characterized in that** it further comprises a device binding box (24) which is connected to the production line (26), wherein the device binding box (24) is configured to provide one or more base profiles (A) corresponding to one or more networks (30).
